Europäisches Patentamt

(19) European Patent Office

Office européen des brevets

(11) Veröffentlichungsnummer: **0 197 469**
**B1**

(12) **EUROPÄISCHE PATENTSCHRIFT**

(45) Veröffentlichungstag der Patentschrift:
07.03.90

(51) Int. Cl.⁴: **C08G 65/44**

(21) Anmeldenummer: **86104336.2**

(22) Anmeldetag: **29.03.86**

(54) Verfahren zur kontinuierlichen Herstellung von Polyphenylenethern.

(30) Priorität: **10.04.85 DE 3512759**

(43) Veröffentlichungstag der Anmeldung:
**15.10.86 Patentblatt 86/42**

(45) Bekanntmachung des Hinweises auf die Patenterteilung:
**07.03.90 Patentblatt 90/10**

(84) Benannte Vertragsstaaten:
**BE DE FR GB IT NL**

(56) Entgegenhaltungen:
EP-A- 0 103 154
EP-A- 0 182 206
DE-A- 3 410 386
US-A- 3 432 469
US-A- 4 463 164

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen(DE)**

(72) Erfinder: **Mitulla, Konrad, Dr., Schwalbenweg 31,
D-6700 Ludwigshafen(DE)**
Erfinder: **Hambrecht, Jürgen, Dr., Am Klosterwald 31,
D-4400 Münster-Hiltrup(DE)**
Erfinder: **Hell, Eduard, Hardenburgstrasse 4,
D-6073 Limburgerhof(DE)**
Erfinder: **Fischer, Hermann, Dr., Hardenburgstrasse 33,
D-6703 Limburgerhof(DE)**
Erfinder: **Dreher, Hermann, Dr., Im Waldwinkel 5,
D-6104 Seeheim-Jugenheim 1(DE)**
Erfinder: **Brandt, Hermann, Dr., Keltenstrasse 30,
D-6707 Schifferstadt(DE)**
Erfinder: **Luetje, Hans, Dr., Benzheimer Ring 1,
D-6710 Frankenthal(DE)**

ACTORUM AG

**Beschreibung**

Die Erfindung bezieht sich auf ein Verfahren zur kontinuierlichen Herstellung hochmolekularer Polyphenylenether aus ein- und/oder zweiwertigen Phenolen, die in den beiden ortho-Stellungen und gegebenenfalls in meta-Position, nicht aber in para-Stellung Alkylsubstituenten aufweisen, durch oxidative Kupplungsreaktion in wenigstens zwei in Reihe angeordneten Polymerisationszonen mit Sauerstoff bei Temperaturen zwischen 10 und 60°C und Drücken zwischen 1 und 10 bar in Anwesenheit eines Katalysatorkomplexes, eines Lösungsmittels und gegebenenfalls eines Aktivators und Ausfällen der erhaltenen Polymeren aus der Lösung durch Zugabe von Fällungsmittel.

Hochmolekulare Polyphenylenether und Verfahren zu ihrer Herstellung sind beispielsweise aus den US-A 3 306 874, 3 306 875, 3 661 848, 3 219 625 und 3 378 505 bekannt. Danach wird die Polymerisation durch oxidative Kupplung einwertiger Phenole in einem oder mehreren Rührreaktoren, die mit Kühlschlangen und Mantelkühlung sowie mit einem Gaseinleitungsrohr versehen sind, unter Vorlage des Katalysatorkomplexes aus Cu-Salzen und Aminen und der Phenole oder unter teilweisem oder vollständigem Zulauf des Katalysatorkomplexes und/oder der Phenole diskontinuierlich durchgeführt. Der Sauerstoff wird in konstanter Menge pro Zeiteinheit zudosiert.

In der US-A 3 306 875 und der DE-A 2 237 186 werden auch Verfahren zur oxidativen Polykondensation der Phenole in Lösungsmittel-/Fällungsmittel-Systemen beschrieben. Nachteil dieser Verfahren ist die Eintopf-Fahrweise, was zu inkonstanter Produktqualität, insbesondere was die Nebenproduktanteile und die gezielten Molekulargewichte anbelangt, führt.

Es sind deshalb auch eine Reihe kontinuierlicher Polymerisationsverfahren zur Herstellung von Polyphenylenethern durch oxidative Kupplung von Phenolen beschrieben worden, wie beispielsweise in der DE-A 3 410 386 und EP-A 103 154. Aus EP-A 103 154 und DE-A 3 410 386 ist es bekannt, Polyphenylenether kontinuierlich in homogener Phase in einer ersten Reaktionsstufe vorzupolymerisieren und in einer nachgeschalteten zweiten Reaktionsstufe auszupolymerisieren. Die Reaktionsstufen bestehen dabei aus Rührkesseln (EP-A 103 154) oder einem oder zwei nacheinander geschalteten Tankreaktoren (1. Stufe von DE-A 3 410 386) und einem Reaktor mit Pfropfenströmung, in dem praktisch keine Rückvermischung stattfindet (2. Stufe von DE-A 3 410 386).

Allen bisher beschriebenen Verfahren gemeinsam ist, daß die oxidative Kupplung in Lösungsmitteln in weitgehend homogener Phase durchgeführt werden und danach gesonderte Aufarbeitungsschritte zur Isolierung der Polyphenylenether ergriffen werden müssen. Es hat sich aber gezeigt, daß alle diese Verfahren die grundlegenden Probleme der Nebenproduktbildung zu Diphenochinonen, vor allem der alkylsubstituierten 4,4'-Diphenochinone, und die damit verbundenen Ausbeuteverluste bzw. Nachteile in den Produkteigenschaften nicht zu lösen vermochten.

Weiterhin ist aus US-A 3 432 469 ein diskontinuierliches Verfahren zur Herstellung von hochmolekularem Polyphenylenether aus verunreinigten Monomeren bekannt. Dazu wird das Polymerisat in einer ersten Polymerisationsstufe ausgefällt, von den Verunreinigungen des Monomeren abgetrennt, erneut gelöst und in einer zweiten Stufe auspolymerisiert.

In US-A 4 463 164 wird ein kontinuierliches einstufiges Polymerisationsverfahren beschrieben, das unter Fällbedingungen abläuft.

Die bekannten Verfahren weisen jedoch über die genannten Mängel hinaus den Nachteil auf, daß die Verfahrensprodukte nur ungenügende multiaxiale Zähigkeiten erreichen, die zudem bei Wärmelagerung stark abfallen.

Es bestand deshalb die Aufgabe, ein Verfahren für die Herstellung der Polyphenylenether zu entwickeln, das in einfacher und kostengünstiger Weise zu Polyphenylenethern in hoher Ausbeute und geringen Nebenproduktanteilen führt.

Diese Aufgabe wird durch die Maßnahmen nach den Patentansprüchen 1 bis 2 gelöst.

Unter hochmolekularen Polyphenylenethern im Sinne der Erfindung werden die durch oxidative Kupplung von 2,6-Dialkyl- und/oder 2,3,6-Trialkylphenolen zu einer Kette alkylsubstituierter, in para-Stellung durch Sauerstoffatome etherartig gebundene Benzolringe verstanden. Die Polymeren weisen zahlenmittlere Molekulargewichte von 5000 bis 80 000, bevorzugt 10 000 bis 60 000, bestimmt nach der in "Macromolecular Syntheses" 1, (1978), Seite 83 beschriebenen Methode, auf.

Die zur Herstellung der hochmolekularen Polyphenylenether verwendeten einwertigen Phenole, die in den beiden ortho-Stellungen, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-tertiär-butylphenol, 2-Methyl-6-propylphenol, 2,6-Dibutylphenol, 2,3,6-Trimethylphenol sowie Gemische dieser Phenole. Als zweiwertige Phenole werden 3,3'-, 5,5'-Tetramethyl-4,4'-dihydroybiphenyl und Tetramethylbisphenol-A eingesetzt.

Bevorzugt wird das für die Polymerisation vorgesehene einwertige Phenol mit einem o-Kresol- und p-Kresol-Anteil von jeweils weniger als 0,1 Gew.% eingesetzt. Besonders bevorzugt wird ein einwertiges Phenol der oxidativen Kupplung unterzogen, das weniger als 0,05 Gew.% o-Kresol und weniger als 0,01 Gew.% p-Kresol enthält. Insbesondere bevorzugt ist ein Verfahren, bei dem Phenol, m-Kresol und mehrkernige Phenole zu weniger als 0,02 Gew.% in den Ausgangsstoffen enthalten sind.

Die oxidative Kupplungsreaktion mit Sauerstoff wird bei Temperaturen zwischen 10 bis 60, bevorzugt 20 bis 30°C, und bei 1 bis 10 bar, bevorzugt 1,1 bis 4 bar absolut, durchgeführt. Sie erfolgt ferner in wenigstens zwei in Reihe angeordneten Polymerisationszonen gemäß Anspruch 1. Die oxidative Polymerisation von Phenolen in mehreren Reaktoren, wobei in einem ersten Reaktor vorpolymerisiert und in einem zweiten Reaktor zuende polymerisiert wird, ist an sich aus der Literatur bekannt, so daß sie hier nicht mehr im einzelnen erläutert werden muß (vgl. US-A 3 405 092, 3 549 670, 4 477 649 und 4 408 040 sowie EP-A1 103 154).

Bei dem für die oxidative Kupplung verwendeten Katalysatorkomplex handelt es sich um eine Kombination aus einem oder mehreren Aminen, wie Dibutylamin, Diethylamin, N,N'-Di-tert-butylethylendiamin, Picolin, Chinolin, Morpholin, Piperazin, Pyridinbasen, Triisopropylamin, Dimethylbutylamin, Dimethylisopropanolamin, Triethanolamin, Triisopropanolamin, Diisopropanolamin oder N-Butylimidazol mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat.

Ein bevorzugter Bereich bei der Menge der eingesetzten Amine liegt üblicherweise bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentrationen der Kupfersalze wird gering gehalten und variiert vorzugsweise von 0,2 bis 2,5 Mol pro 100 Mol des Monomeren.

Die oxidative Kupplung kann jedoch auch in Gegenwart von Mn-Chelatkomplexen durchgeführt werden, wie dies beispielsweise in der US-A 3 956 242 beschrieben ist. Vorzugsweise werden Mn-II-Hydroxyoxim-Chelatkomplexe verwendet.

Der Anteil des Lösungsmittels liegt üblicherweise im Bereich von 1:1 bis 20:1 Gew.-Teilen, d.h. maximal bis zu einem Überschuß des 20-fachen an Lösungsmittel, bezogen auf das Gewicht des Monomeren. Es soll als Lösungsmittel ein aromatischer $C_6$- bis $C_{10}$-Kohlenwasserstoff verwendet werden, der gegebenenfalls Halogensubstituenten tragen kann. Geeignete Kohlenwasserstoffe sind Benzol, Chlorbenzol, Toluol oder Ethylbenzol. Als Lösungsmittel können jedoch auch aliphatische $C_1$- bis $C_6$-Halogenkohlenwasserstoffe wie z.B. Methylenchlorid, Chloroform, Dichlorethan, Trichlorethan eingesetzt werden. Denkbar sind auch Mischungen der oben genannten Lösungsmittel. Ganz besonders bevorzugt werden Toluol, Ethylbenzol, Chloroform oder Dichlorethan eingesetzt.

Darüber hinaus kann gemäß US-A 3 544 515 die Reaktionsmischung einen Aktivator wie ein Diarylguanidin oder Diarylformamidin enthalten.

Als Fällungsmittel kommen aliphatische $C_5$- bis $C_{10}$-Kohlenwasserstoffe, wie Pentan, Hexan, Cyclohexan und aliphatische $C_1$–$C_8$-Alkohole wie Methanol, Ethanol, Isopropanol oder Butanol zur Anwendung. Ganz besonders bevorzugt werden Hexam oder Cyclohexan und Methanol und/oder Ethanol eingesetzt. Zusätzlich zu diesen primären Fällmitteln können ggf. zur Verstärkung der Fällwirkung bzw. zur Erleichterung der Katalysatorabtrennung Wasser und anorganische oder organische Säuren wie Salzsäure, Schwefelsäure oder Eisessig zugesetzt werden. Durch Zugabe der Fällungsmittel sollen die erhaltenen Polymeren aus der Lösung ausgefällt werden.

Das Verhältnis von Lösungsmittel zu Fällungsmittel richtet sich nach der Höhe des gewünschten Molekulargewichts des Polyphenylenethers. Je höher das gewünschte Molekulargewicht liegt, um so geringer ist der Anteil der zuzusetzenden Fällungsmittelmenge. In der Regel werden 5 bis 80 Vol.% bezogen auf die zugesetzte Lösungsmittelmenge, an Fällungsmittel zugesetzt. Besonders bevorzugt liegen die Fällmittelmengen zwischen 5 und 25 Vol.%. Bei Zugabe von bis zu 50 Vol.% Wasser, bezogen auf die zugesetzte primäre Fällmittelmenge, kann der Fällungsmittelanteil bis auf 3 bis 20 Voll.% vermindert werden. Zur Verbesserung der Katalysatorabtrennung können dem Fällungsmittel ggf. bis zu 50 Vol.% bezogen auf die Fällmittelmenge, an Eisessig oder Schwefelsäure zugesetzt werden.

Bei dem erfindungsgemäßen Verfahren erfolgt die oxidative Kupplung in wenigstens zwei in Reihe angeordneten Polymerisationszonen, wobei in der ersten Zone bis zu einer Grenzviskosität des Polymeren, gemessen bei 25°C in Chloroform, von weniger als 0,4, bevorzugt weniger als 0,2 dl/g und anschließend in mindestens einer weiteren Zone unter Zugabe von Fällungsmittel bis zu einer Grenzviskosität des Polymeren von mehr als 0,4 bevorzugt 0,41 bis 1,00 dl/g polymerisiert wird. Unter Grenzviskosität (engl. intrinsic viscosity) wird dabei der auf unendliche Verdünnung extrapolierte Wert der Viskositätszahl verstanden (vgl. W. Holzmüller und K. Altenburg, "Physik der Kunststoffe", Akademie-Verlag, Berlin, 1961, Seiten 171 bis 198). Bevorzugt soll das Fällungsmittel so zugegeben werden, daß in der zweiten Zone mehr als 90 Gew.% des Polyphenylenethers als dispergierter Feststoff vorliegt. Bei dem erfindungsgemäßen Verfahren werden die erste Polymerisationszone durch einen Treibstrahl- und einen Rührkesselreaktor, die hintereinander innerhalb eines Reaktorkreises angeordnet sind, und die weitere(n) Polymerisationszone(n) jeweils durch einen Rührkesselreaktor gebildet. Treibstrahl- und Rührkesselreaktoren sind an sich bekannt und beschrieben in den Literaturstellen: "Ullmanns Encyklopädie der technischen Chemie", 4. Auflage, Band 3, Seiten 366 bis 375, Verlag Chemie GmbH, D–6940 Weinheim, 1973; "Chemie-Technik", 11, (1982), Seiten 1061 bis 1066 und "Chemie-Ingenieur-Technik" 42, (1970), Seiten 474 bis 479. Ein Verfahren zur kontinuierlichen oxidativen Kupplung in wenigstens zwei in Reihe angeordneten Polymerisationszonen, die Treibstrahl- und Rührkesselreaktoren sein können, ist in EP-A 182 206 vorgeschlagen worden.

Die erste Reaktionszone besteht aus zwei Reaktoren, nämlich einem Treibstrahlreaktor und einem Rührkesselreaktor. Zwischen diesen Reaktoren sind Wärmetauscher und ein Förderaggregat eingebaut. Zur oxidativen Kupplung werden dem ersten Reaktor, dem Treibstrahlreaktor, 60 bis 100 Gew.% und der zweiten Reaktionszone, dem Rührkesselreaktor 0 bis 40 Gew.% der stöchiometrisch erforderlichen Sauerstoffmenge zugeführt. Vorzugsweise werden der Sauerstoff, das monomere Lösungsmittelgemisch und der Katalysatorkomplex den Reaktoren so zugeführt, daß das Reaktionsgemisch beim Verlassen der ersten Reaktionszone bis zu Umsätzen größer als 90 Gew.%, vorzugsweise größer als 95 Gew.%, bezogen auf das eingesetzte Phenol und Grenzviskositäten kleiner als 0,3 dl/g, vorzugsweise kleiner als 0,2 dl/g, auspolymerisiert ist. Die mittleren Verweilzeiten des Reaktionsgemischs in der ersten Reaktionszone betragen 10 bis 120 Minuten, vorzugsweise 15 bis 60 Minuten, wobei unter mittlerer Verweilzeit die Zeit verstanden wird, die das Reaktionsgemisch im Mittel in der betreffenden Zone verweilt. Sie ist definiert als das Verhältnis der in der betreffenden Zone befindlichen Reaktionsmenge zu der je Zeiteinheit in der Zone durchgesetzten Menge an Reaktionsgemisch.

Die oxidative Kupplung in der ersten Reaktionsstufe wird bei 10 bis 60°C, vorzugsweise 20 bis 30°C und Drucken von 1 bis 10 bar, vorzugsweise 1,1 bis 4 bar ausgeführt.

Die Polymerisation wird in mindestens einem nachfolgenden Reaktor bis zu Grenzviskositäten von mehr als 0,4 dl/g, vorzugsweise 0,41 bis 1,00 dl/g geführt. Der oder die Nachreaktoren stellen Rührkessel- oder Turmreaktoren, d.h. schlanke Rührkesselreaktoren dar, in denen eine gute Durchmischung durch antriebsstarke Rührmotoren gewährleistet ist. In diesen Nachreaktoren werden zwei Maßnahmen miteinander verbunden: die erste ist die Nachpolymerisation unter Begasung mit Sauerstoff und die andere die Fällung des Polyphenylenethers durch Zugabe von Fällungsmittel bzw. Fällungsmittelgemischen. Die Begasung erfolgt über eine oder mehrere Begasungsdüsen unter optimaler Dispergierung des Sauerstoffs durch den Rührer. Die Fällungsmittelzugabe erfolgt an einer oder mehreren Stellen der Nachreaktoren. Sie richtet sich in der Menge nach dem gewünschten Molekulargewicht und wird so ausgeführt, daß am Polymerisationsende mehr als 90 Gew.%, vorzugsweise mehr als 95 Gew.% der zu erwartenden Polyphenylenethermenge ausgefällt sind. Das Polymere kann nach dieser Reaktionsstufe direkt filtriert, zentrifugiert oder dekantiert werden. Die mittleren Verweilzeiten in der (den) Nachreaktionsstufe(n) betragen 10 bis 150 Minuten, vorzugsweise 20 bis 60 Minuten.

Die oxidative Kupplung und Fällung in der (den) Nachreaktor(en) wird bei 20 bis 60°C, vorzugsweise 25 bis 40°C und Drucken von 1 bis 10 bar, vorzugsweise 1,1 bis 4 bar ausgeführt. Die Zugabe des Fällungsmittels erfolgt kontinuierlich an mindestens einer, vorzugsweise jedoch mehreren Stellen der (des) Nachreaktor(en). Im Falle der Fällungsmittelgemische mit Wasser erfolgt die Dosierung über mehrere Stufen mit steigendem Wasseranteil. Die Eisessigzugabe erfolgt vorzugsweise am Ende der Polymerisation ggf. nach der Zugabe des Fällungsmittels.

In einer bevorzugten Ausführungsform des erfindungsgemäßen Verfahrens wird in einem nachgeschalteten Verfahrensschritt das im Filtrat komplexierte Kupfer durch Zusatz von Essigsäure oder anorganischer Säure sowie Salzsäure oder Schwefelsäure gefällt und abgetrennt.

Vorteile des erfindungsgemäßen Verfahrens sind die einfache und wirtschaftliche Herstellung der Polyphenylenether in hoher Reinheit. Besonders hervorzuheben sind die hohen Raum-Zeit-Ausbeuten bei sehr niedrigen Nebenproduktanteilen und das vereinfachte Verfahren, bei dem gegenüber dem Stand der Technik in einem kontinuierlichen Prozess direkt gefällte Polymerisate erzeugt werden.

Gegenüber den bisher bekannt gewordenen Verfahren wird der Katalysatorabtrennschritt und Fällschritt eingespart, ohne daß Nachteile bezüglich Restkatalysatorgehalt oder Stabilität des Polyphenylenethers auftreten. Darüberhinaus wird die zur Fällung benötigte Fällungsmittelmenge minimiert.

Die Erfindung wird nachfolgend unter Hinweis auf die Zeichnungen anhand zweier Ausführungsbeispiele näher erläutert.

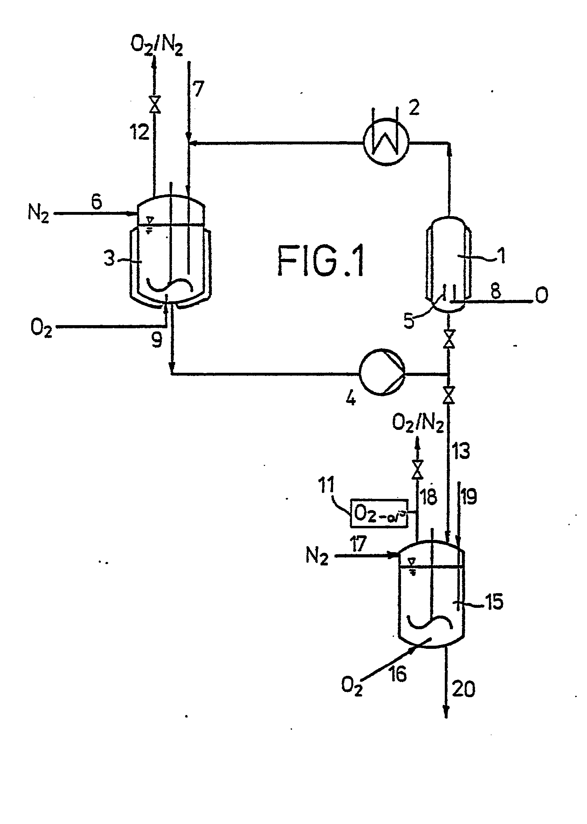

Nach Figur 1 sind in einem Kreislaufsystem ein Treibstrahlreaktor (1), ein Wärmetauscher (2), ein Rührkesselreaktor, kurz Rührreaktor (3) und eine Kreiselpumpe (4) über Rohrleitungen miteinander verbunden. Im unteren Teil des Treibstrahlreaktors ist ein Impulsaustauschraum (5) angedeutet. Nach dem Inertisierten des Kreislaufsystems mit Stickstoff über die Zuleitung (6) wird das erforderliche Volumen des aromatischen $C_7$- bis $C_{10}$-Kohlenwasserstoffs bei (7) so eingebracht, daß bis zu 90% des nutzbaren Kreislaufvolumens gefüllt ist. Der Katalysatorkomplex wird nach Inbetriebnahme des Rührwerks des Rührreaktors (3) und der Kreiselpumpe (4) ebenfalls bei (7) kontinuierlich zugeführt. Die Dosierung der zu polymerisierenden Phenolmenge über denselben Zulaufstutzen (7) erfolgt ebenfalls kontinuierlich in Form einer 50 bis 100 gew.%igen Lösung im obengenannten Lösungsmittel. Mit (8) ist eine Einrichtung für die Zufuhr von Sauerstoff in ein Treibstrahlreaktor (1) bezeichnet. Bei Erreichen einer geforderten Grenzviskosität der Polymerlösung wird diese über eine Rohrleitung (13) der zweiten Verfahrensstufe zugeführt, in der die Polymerisierungsphase abgeschlossen wird.

Gemäß Figur 1 mündet die Rohrleitung (13) in einer weiteren Reaktoreinheit (15). Diese umfaßt einen Rührreaktor (15), eine Einrichtung (16) für die Zufuhr von Sauerstoff sowie Rohrleitungen (17) für die Zufuhr von Stickstoff, (18) für die Ableitung des Abgases und (19) für die Zuführung des Fällungsmittels. An die Abgasleitung (18) ist eine Meßeinrichtung (20) angeschlossen.

Beispiel 1

Anfahren des kontinuierlichen Prozesses:

In dem in Figur 1 dargestellten Kreislaufsystem bestehend aus den Aggregaten 1, 2, 3 und 4 wird folgende Mischung vorgelegt:

45,76 Mol Toluol
0,087 Mol Kupfer-I-bromid
1,596 Mol Di-n-butylamin

In diese, mit einem Durchsatz von 120 l/h umgewälzte, über den Rührreaktor 80 l/h Stickstoff inertisierte und auf 25°C temperierte Lösung, wird eine Monomerlösung, bestehend aus:

8,00 Mol 2,6-Dimethylphenol
9,90 Mol Toluol dem Rührreaktor innerhalb von 30 min eindosiert. Die Reaktionslösung wird mit dem Beginn des Monomerenzulaufs mit Sauerstoff im Treibstrahlreaktor begast. Dazu wird zunächst ein Startwert für die Eintragsrate an Sauerstoff von 30 l/h eingestellt. Durch Messung des Sauerstoffgehaltes in der Abgasleitung sowie durch Messung des in der Flüssigphase gelösten Sauerstoffs wird der Sauerstoffeintrag in der Folge in der Weise geregelt, daß bei konstantem Stickstoffeintrag von 80 l/h der Sauerstoffgehalt im Abgas nicht über 4 Gew.% ansteigt.

Kontinuierlicher Prozeß:

Nach der Zudosierung des Toluol/Dimethylphenol-Gemisches werden folgende getrennt hergestellten Zuläufe über die Zulaufleitung 7 kontinuierlich in das Reaktionskreislaufsystem, kurz Reaktorkreis, bestehend aus den Aggregaten 1, 2, 3 und 4 gegeben:

Zulauf A:
0,9 Mol Toluol/Minute
0,0003 Mol Kupfer-I-bromid/Minute
0,0532 Mol Di-n-butylamin/Minute

Zulauf B:
0,9 Mol Toluol/Minute
0,27 Mol 2,6-Dimethylphenol/Minute

Der Sauerstoff wird in der oben beschriebenen Weise in das Reaktionsgemisch eingedüst. Die Reaktionstemperatur wird bei 27±2°C gehalten und der Druck im Aggregat 3 beträgt 1,4 bar. Aus dem Reaktorkreis wird über die Ablaufleitung 13 kontinuierlich die gleiche Menge an Reaktionslösung, wie sie über die Zuläufe A + B pro Minute in das Reaktionssystem zudosiert wird, ausgetragen. Der Umsatz im Reaktoraustrag, bezogen auf monomeres 2,6-Dimethylphenol, beträgt 98,5 Gew.%; die Verweilzeit im Kreislaufsystem liegt bei 35 Minuten. Der Reaktoraustrag in Leitung 13 weist eine Grenzviskosität von 0,12 dl/g auf, der Diphenochinon-Anteil liegt bei 0,15 Gew.%, bezogen auf eingesetztes 2,6-Dimethylphenol.

Über die Leitung 13 wird die Reaktionslösung der 1. Polymerisationsstufe in den Rührreaktor 15 zur Nachpolymerisation eingetragen. Im Nachreaktor 15 wird der Reaktionslösung über die Begasungsdüse 16 Sauerstoff zugeführt. Die Eintragsrate beträgt 3 l/h und die Inertisierung des Reaktors 15 mit Stickstoff über die Leitung 17 erfolgt wie bei der 1. Reaktionsstufe beschrieben mit einem konstanten Eintrag von 8 l/h. Die Sauerstoffzufuhr wird bei Überschreiten der kritischen Sauerstoffkonzentration von 4 Gew.%, gemessen durch die Sonde 11, zurückgeregelt. Gleichzeitig mit dem Sauerstoffaustrag wird der Reaktionslösung Fällungsmittel zugesetzt. Bei einer gewünschten Grenzviskosität von 0,48 dl/g, gemessen bei 25°C in Chloroform gemäß DIN 51 562 werden über die Fällmittelleitung 19 0,40 Mol Methanol/Minute zudosiert. Der gewünschte Polyphenylenether fällt am kontinuierlichen Produktaustrag des Reaktors 15 in einer Ausbeute von 96,5 Gew.% an, der Diphenochinongehalt im Polymeren liegt unter 100 Gew.-ppm. Der Polyphenylenether wird anschließend filtriert, mit Methanol nachgewaschen und getrocknet und kann so ausgezeichnet der weiteren Verwendung zugeführt werden.

## Beispiel 2

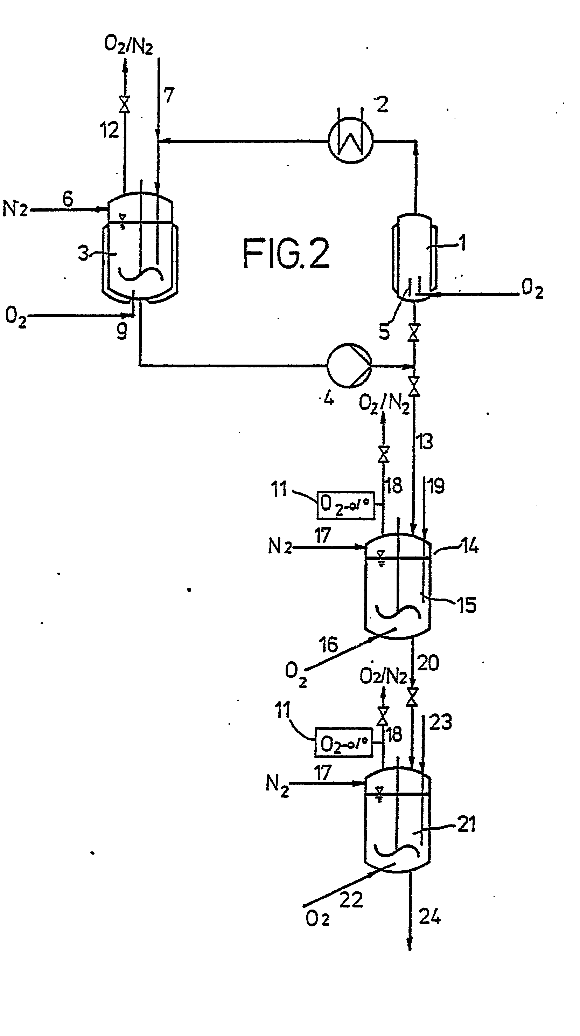

In der ersten Stufe des Beispiels 2 wird wie in Beispiel 1 beschrieben in dem Kreislaufsystem aus den Aggregaten 1, 2, 3, 4 (s. Fig. 2) polymerisiert. Im Gegensatz zu Beispiel 1 werden jedoch nach der Anfahrphase folgende kontinuierlichen Zuläufe über die Leitung 7 eindosiert:

Zulauf A:
0,9 Toluol/Minute
0,0035 Mol Cu(OH)$_2$.CuCO$_3$/Minute
0,035 Mol Morpholin/Minute
0,6 g 40%iger wäßriger Bromwasserstoff/Minute

Zulauf B:
0,8 Mol Toluol/Minute
0,25 Mol Methanol/Minute
0,25 Mol 2,6-Dimethylphenol/Minute

Sauerstoffdosierung und Reaktionsbedingungen werden wie in Beispiel 1 gewählt, die mittlere Verweilzeit im Kreislaufsystem beträgt 25 Minuten. Der Reaktoraustrag in Leitung 13 hat eine Grenzviskosität von 0,18 dl/g und einen Diphenochinonanteil von 0,05 Gew.%, bezogen auf eingesetztes 2,6-Dimethylphenol, wobei mehr als 99 Gew.% des Phenols umgesetzt sind.

Über die Leitung 13 wird die Reaktionslösung wie in Beispiel 1 beschrieben in den 1. Nachreaktor 15 eingetragen und unter Zulauf von 0,2 Mol/Minute Methanol bis zu einer Grenzviskosität von 0,40 dl/g polymerisiert. Die Methanolzugabe wird dabei so vorgenommen, daß der Polyphenylenether gerade noch nicht ausfällt. Sauerstoffbegasung und Reaktionsbedingungen werden wie in Beispiel 1 beschrieben gewählt. Die mittlere Verweilzeit im Reaktor 15 beträgt 15 Minuten.

Über die Leitung 20 wird die Reaktionslösung in einen 2. Nachreaktor eindosiert, der als Rührreaktor ausgebildet ist. In diesem Nachreaktor wird über die Düse 22 wie in Beispiel 1 beim 1. Nachreaktor beschrieben mit Sauerstoff begast und zur Betriebssicherheit über die Leitung 17 mit Stickstoff in der Gasphase verdünnt. Die Gasmengenströme entsprechen denen in Beispiel 1. Über die Leitung 23 wird nun eine Lösung von Methanol und Eisessig in Form einer 20 gew.%igen wäßrigen Lösung zudosiert und die den Zuläufen aus Leitung 20 und 23 entsprechende Menge an Reaktionsgut über die Leitung 24 ausgetragen. Die mittlere Verweilzeit im Reaktor 21 beträgt 20'. Das resultierende Dreiphasengemisch aus katalysatorhaltigem Methanol/Wassergemisch, aus Methanol/Toluol-Oligomerengemisch und aus gefälltem Polyphenylenether wird anschließend zentrifugiert. Der resultierende Polyphenylenether hat eine Grenzviskosität von 0,52 dl/g, gemessen bei 25°C in Chloroform und einen Diphenochinon-Gehalt von <100 Gew.-ppm. Die Ausbeute an Polyphenylenether beträgt 96 Gew.%.

## Patentansprüche

1. Verfahren zur kontinuierlichen Herstellung hochmolekularer Polyphenylenether mit einem zahlenmittleren Molekulargewicht von 5000 bis 80 000 aus ein- und/oder zweiwertigen Phenolen, die in den beiden ortho-Stellungen und gegebenenfalls in meta-Position, nicht aber in para-Stellung Alkylsubstituenten aufweisen, durch oxidative Kupplungsreaktion in wenigstens zwei in Reihe angeordneten Polymerisationszonen mit Sauerstoff bei Temperaturen zwischen 10 und 60°C und Drücken zwischen 1 und 10 bar in Anwesenheit eines Katalysatorkomplexes, eines Lösungsmittels und gegebenenfalls eines Aktivators und Ausfällen der erhaltenen Polymeren aus der Lösung durch Zugabe von Fällungsmittel, wobei in der ersten Polymerisationszone bis zu einer Grenzviskosität des Polymeren, gemessen bei 25°C in Chloroform, von weniger als 0,4 dl/g und in mindestens einer weiteren Polymerisationszone bis zu einer Grenzviskosität des Polymeren von mehr als 0,4 dl/g polymerisiert wird, dadurch gekennzeichnet, daß im Anschluß an die Polymerisation in der ersten Zone in mindestens einer weiteren Zone unter Zugabe von Fällungsmittel polymerisiert wird, wobei die erste Polymerisationszone durch einen Treibstrahl- und einen Rührkesselreaktor, die hintereinander innerhalb eines Reaktorkreislaufsystems angeordnet sind, und die weitere(n) Polymerisationszone(n) jeweils durch einen Rührkesselreaktor gebildet werden.

2. Verfahren nach Anspruch 1, dadurch gekennzeichnet, daß mehr als 90 Gew.% des Polyphenylenethers in der zweiten und gegebenenfalls weiteren Zone als dispergierter Feststoff vorliegen.

## Claims

1. A process for the continuous preparation of high molecular weight polyphenylene ethers having a number average molecular weight of from 5,000 to 80,000 from monohydric and/or dihydric phenols which have alkyl substituents in the two ortho-positions and, if desired, in the meta-position but not in the para-position, by an oxidative coupling reaction in two or more polymerization zones arranged in series, with oxygen, at from 10 to 60°C and under from 1 to 10 bar, in the presence of a catalyst complex and of a solvent and in the presence or absence of an activator, and with precipitation of the resulting polymers from the solution by the addition of a precipitating agent, polymerization being continued in the first polymerization zone to a polymer limiting viscosity of less than 0.4 dl/g, measured at 25°C in chloroform, and in one or more further polymerization zones to a polymer limiting viscosity of more than 0.4 dl/g, wherein, after the polymerization in the first zone, polymerization is carried out in one or more further zones with the addition of a precipitating agent, the first polymerization zone being formed by a propulsive jet reactor and a stirred kettle reactor, which are arranged one behind the other within a reactor circulation system, and the further polymerization zone or zones is or are each formed by a stirred kettle reactor.

2. A process as claimed in claim 1, wherein more than 90% by weight of the polyphenylene ether are present in the second and any further zone as a dispersed solid.

## Revendications

1. Procédé de préparation continue de haut polymère poly(oxyde de phénylène) avec un poids moléculaire moyen en nombre de 5000 à 80 000 à partir de phénols mono et/ou bivalents qui présentent des substituants alkyle sur les deux positions ortho et éventuellement en position méta mais pas en position para, par réaction de copulation oxydative, dans au moins deux zones de polymérisation placées en série, avec de l'oxygène à des températures de 10 à 60°C et des pressions de 1 à 10 bar en présence d'un complexe catalytique, d'un solvant et éventuellement d'un activateur, et précipitation du polymère obtenu de la solution par addition d'un agent précipitant, dans lequel on polymérise, dans la première zone de polymérisation, jusqu'à une viscosité limite du polymère, mesurée à 25°C dans le chloroforme, de moins de 0,4 dl/g et, dans au moins une autre zone de polymérisation, jusqu'à une viscosité limite du polymère de plus de 0,4 dl/g, caractérisé en ce que, en complément à la polymérisation dans la première zone, on polymérise dans au moins une autre zone avec addition d'un agent précipitant, la première zone de polymérisation étant constituée par un réacteur à jet et un réacteur à cuve agitée, qui sont disposés l'un à la suite de l'autre à l'intérieur d'un système circulaire de réacteurs, et la (les) autre(s) zone(s) de polymérisation est (sont) constituée(s) à chaque fois par un réacteur à cuve agitée.

2. Procédé selon la revendication 1, caractérisé en ce que plus de 90% en poids du poly(oxyde de phénylène) se présente sous forme de matière solide dispersée dans la deuxième zone et éventuellement dans les suivantes.

FIG.1

FIG.2